(19) Europäisches Patentamt
European Patent Office
Office européen des brevets

(11) **EP 2 895 880 B1**

(12) **EUROPÄISCHE PATENTSCHRIFT**

(45) Veröffentlichungstag und Bekanntmachung des Hinweises auf die Patenterteilung:
**11.07.2018   Patentblatt 2018/28**

(21) Anmeldenummer: **13742238.2**

(22) Anmeldetag: **30.07.2013**

(51) Int Cl.:
**G01S 15/93** *(2006.01)*      **G01S 7/52** *(2006.01)*

(86) Internationale Anmeldenummer:
**PCT/EP2013/065962**

(87) Internationale Veröffentlichungsnummer:
**WO 2014/040788 (20.03.2014 Gazette 2014/12)**

(54) **VERFAHREN ZUR FUNKTIONSÜBERWACHUNG VON ULTRASCHALLSENSOREN**

METHOD FOR FUNCTION MONITORING ULTRASOUND SENSORS

PROCÉDÉ DE SURVEILLANCE FONCTIONNELLE DE CAPTEURS À ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2012   DE 102012216290**

(43) Veröffentlichungstag der Anmeldung:
**22.07.2015   Patentblatt 2015/30**

(73) Patentinhaber: **Robert Bosch GmbH**
**70442 Stuttgart (DE)**

(72) Erfinder:
• **SCHOENHERR, Michael**
  **71272 Renningen-Malmsheim (DE)**
• **ROKA, Andras**
  **H-1124 Budapest (HU)**

(56) Entgegenhaltungen:
**EP-A1- 2 081 052          EP-A2- 2 472 286**
**DE-A1-102005 057 973**

EP 2 895 880 B1

**Beschreibung**

Stand der Technik

Die Erfindung betrifft ein Verfahren zur Funktionsüberwachung von Ultraschallsensoren eines Fahrzeugs, wobei das Fahrzeug mindestens einen Ultraschallsensor, der parallel zur Bewegungsrichtung ausgerichtet ist, und mindestens einen Ultraschallsensor, der senkrecht zur Bewegungsrichtung ausgerichtet ist, umfasst. Des Weiteren betrifft die Erfindung ein Computerprogrammprodukt und eine Vorrichtung zur Durchführung des Verfahrens.

In modernen Fahrzeugen werden verschiedene Fahrassistenzsysteme eingesetzt, die mit Hilfe von Daten über die Umgebung des Fahrzeugs den Fahrer bei der Durchführung verschiedener Fahrmanöver unterstützen. Diese Fahrassistenzsysteme umfassen beispielsweise Einparksysteme, welche selbständig Parklücken erkennen und das Fahrzeug in die Parklücke führen können. Ein weiteres Beispiel sind Rückfahrassistenten, die den Fahrweg während des Rückwärtsfahrens auf Hindernisse überprüfen. Zur Erfüllung ihrer Aufgaben benötigen die genannten Systeme zuverlässige Sensoren, um ein möglichst genaues Abbild der Umgebung des Fahrzeugs zu erhalten. Häufig kommen dafür Ultraschallsensoren zum Einsatz. Dabei wird von einem Sender ein Ultraschallsignal ausgesendet, dessen Echo bei Reflexion an einem Hindernis von einem Empfänger am Fahrzeug registriert wird. Aus der Zeit, die zwischen Aussenden und Empfangen des Signals vergangen ist, und der bekannten Schallgeschwindigkeit kann der Abstand zwischen dem Fahrzeug und dem reflektierenden Hindernis berechnet werden. Um ein Abbild der Umgebung des Fahrzeugs zu erhalten, werden diese Messungen mehrfach hintereinander mit mehreren am Fahrzeug angeordneten Ultraschallsensoren ausgeführt.

Die verwendeten Ultraschallsensoren können jedoch beispielsweise durch Verschmutzung oder durch physikalische Einwirkung beschädigt und in ihrer Funktion beeinträchtigt werden. Dies kann dazu führen, dass das Abbild über die Umgebung des Fahrzeugs, mit dem die Fahrassistenzsysteme arbeiten, verfälscht ist. Daher ist es erforderlich, einen Ausfall oder eine Fehlfunktion eines Ultraschallsensors rechtzeitig zu erkennen.

Aus DE 10 2008 004 641 A1 ist eine Detektionsvorrichtung für ein Fahrzeug bekannt, bei der die Funktionstüchtigkeit der beispielsweise auf Ultraschallbasis arbeitenden Sensoren überprüft wird. Das Fahrzeug ist mit mehreren Sensoren ausgerüstet, deren Signale untereinander verglichen werden. Beim Ausbleiben von Signalen bei einem Sensor wird der Sende-/Empfangsbereich dieses Sensors so konfiguriert, dass Bodenechos, das heißt vom Boden reflektierte Ultraschallechos, empfangen werden können. Sofern anschließend keine vom Boden reflektierten Echos empfangen werden, wird der jeweilige Sensor als funktionsuntüchtig erkannt.

Aus DE 10 2009 032 124 A1 ist ein Verfahren bekannt, mit dem die Funktionstüchtigkeit eines Radargeräts einer Fahrassistenzeinrichtung überprüft wird. Dazu werden im Empfangssignal diejenigen Frequenzen ausgewertet, bei denen die Reflexionen des Sendesignals von dem Boden erwartet werden. Durch den Einfluss des Doppler-Effekts ist diese Frequenz abhängig von der aktuellen Geschwindigkeit des Fahrzeugs. Diese Frequenz wird zunächst ermittelt, wobei der Abstand des Radargeräts zum Boden berücksichtigt wird. Anschließend wird die Amplitude des bei der Doppler-Frequenz erhaltenen Echosignals mit einem Referenzwert verglichen. Der Referenzwert kann beispielsweise aus dem Signal-zu-Rausch-Abstand bestimmt werden. Da der Zustand des Bodens unbekannt ist, werden bei der Auswertung des Zustands des Radargeräts mehrere Messungen berücksichtigt. Wird aus den Messungen erkannt, dass das Radargerät blockiert ist, wird eine Warnmeldung ausgegeben.

Aus DE 10 2005 057 973 A1 ist ein Verfahren zur Funktionsprüfung eines Ultraschallsensors an einem Kraftfahrzeug bekannt, bei dem in einem Prüfungsbetrieb ein so großes Ultraschallsignal ausgestrahlt wird, dass unter herkömmlichen Bedingungen dieses Ultraschallsignal von einem Boden vor dem Fahrzeug reflektiert und wieder empfangen wird. Damit kann ein ordnungsgemäßes Funktionieren des Ultraschallsensors festgestellt werden.

Aus EP 2 081 052 A1 ist eine Detektionsvorrichtung eines Fahrzeugs mit einer Funktionseinheit zum Senden und Empfangen von Signalen bekannt. Es ist vorgesehen, dass die Funktionseinheit zumindest ein erstes und ein weiteres Funktionselement aufweist, deren Signaleingänge einem Vergleich zur Feststellung eines assoziativen Signalaufkommens unterliegen, und bei Ausbleiben der Signale bei einem der Funktionselemente eine Konfiguration dessen Sende-/ Empfangsbereich auf einen zu erfassenden Fahrbahngrund derart erfolgt, dass das entsprechende Funktionselement bei Funktionstüchtigkeit zwangsläufig zum Empfang von Signal-Reflexionen eingestellt ist

Aus EP 2 472 286 A2 ist ein Verfahren zur Auswertung von Signalen eines Ultraschallsensors bekannt, wobei zu einem vorgegebenen Sendezeitpunkt ein Messsignal ausgesendet und in Reaktion auf das Messsignal mindesten ein Echosignal empfangen und ausgewertet wird, wobei während der Auswertung jedes empfangene Echosignal mit einer Schwellwertkurve verglichen wird, wobei in einer ersten Betriebsart der Verlauf der Schwellwertkurve so angepasst wird, dass empfangene Echosignale deren Amplituden unterhalb der Schwellwertkurve liegen als Störsignalanteile erkannt und ausgeblendet werden, und empfangene Echosignale, deren Amplituden oberhalb der Schwellwertkurve liegen, als Nutzsignalanteile erkannt und zur Ermittlung von Abständen zu erkannten Objekten ausgewertet werden. Um eine Erweiterung der Funktionalität eines Ultraschallsystems zu ermöglichen, wird in einer zweiten Betriebsart der Verlauf der Schwellwertkurve so angepasst, dass als Bodenreflektionen erkannte Störsignalanteile erfasst werden, aus welchen unter Ausnutzung des Dopplereffekts eine Fahrzeuggeschwindigkeit relativ zu einer Fahrbahnoberfläche ermittelt wird.

Nachteilig am Stand der Technik ist, dass die bekannten Verfahren zur Überprüfung der Funktionsfähigkeit von Ultraschallsensoren auf der Auswertung von Bodenechos beruhen, jedoch die zu erwartende Amplitude der Bodenechos nicht bekannt ist, da auch die Eigenschaften des Bodens unbekannt sind. Des Weiteren kann mit den aus dem Stand der Technik bekannten Verfahren nur ermittelt werden, ob ein Ultraschallsensor Signale empfangen kann. Eine beispielsweise durch Verschmutzung oder Alterung des Sensors verursachte verringerte Empfindlichkeit kann mit diesen Methoden nicht nachgewiesen werden. Dies wäre jedoch wünschenswert, um bereits vor dem völligen Ausfall eines Ultraschallsensors eine Warnung geben zu können.

Offenbarung der Erfindung

Es wird ein Verfahren zur Funktionsüberwachung von Ultraschallsensoren eines Fahrzeugs vorgeschlagen, wobei das Fahrzeug mindestens einen Ultraschallsensor, der parallel zur Bewegungsrichtung ausgerichtet ist, und mindestens einen Ultraschallsensor, der senkrecht zur Bewegungsrichtung ausgerichtet ist, umfasst, wobei die Ultraschallsensoren Ultraschallsignale mit einer Frequenz $f_0$ aussenden und wobei die Ultraschallsensoren während der Fahrt vom Boden reflektierte Bodenechos empfangen, wobei mit mindestens einem senkrecht zur Bewegungsrichtung ausgerichteten Ultraschallsensor ein Bodenecho als Referenzsignal aufgezeichnet wird und mit mindestens einem parallel zur Bewegungsrichtung ausgerichteten Ultraschallsensor ein dopplerverschobenes Bodenecho als Messsignal aufgezeichnet wird und wobei abhängig von der Doppler-Frequenz $f_1$ des dopplerverschobenen Bodenechos ein Verhältnis aus Messsignal und Referenzsignal gebildet wird und aus mindestens zwei bei verschiedenen Dopplerfrequenzen $f_1$ bestimmten Verhältnissen die Frequenzgangkurve des mindestens einen parallel zur Bewegungsrichtung ausgerichteten Ultraschallsensors ermittelt wird und wobei eine Fehlfunktion eines Ultraschallsensors durch Abweichungen der ermittelten Frequenzgangkurve von einer Referenzfrequenzgangkurve erkannt wird.

Das Fahrzeug ist mit einer Vielzahl von Ultraschallsensoren ausgerüstet, von denen einige parallel zur Bewegungsrichtung ausgerichtet sind, das heißt nach vorne oder nach hinten gerichtet sind. Weitere Sensoren sind senkrecht zur Bewegungsrichtung des Fahrzeugs ausgerichtet, das heißt die Sensoren sind vom Fahrzeug aus gesehen nach links oder nach rechts ausgerichtet. Alle Sensoren senden Ultraschallsignale mit einer Frequenz $f_0$ aus und empfangen anschließend eingehende Ultraschallechos. Aus der Signallaufzeit wird dann der Abstand zum reflektierenden Objekt errechnet.

Bewegt sich das Fahrzeug, so verändern sich die Frequenzen der Ultraschallechos, die von den nach vorne oder nach hinten ausgerichteten Ultraschallsensoren empfangen werden. Diese Veränderung erfolgt aufgrund des Doppler-Effekts und wirkt daher nur auf Sensoren, die parallel zur Bewegungsrichtung des Fahrzeugs ausgerichtet sind. Die nach vorne ausgerichteten Sensoren empfangen die Bodenechos bei einer erhöhten Frequenz, während sich die Frequenz der von den nach hinten ausgerichteten Sensoren empfangenen Bodenechos verringert. Die Doppler-Frequenz $f_1$ ergibt sich für die nach vorne ausgerichteten Ultraschallsensoren in Abhängigkeit der Fahrzeuggeschwindigkeit $v_1$ zu :

$$f_1 = (1 + 2 \cdot (v_1 : v_0)) \cdot f_0 .$$

Dabei ist $v_0$ die Schallgeschwindigkeit, $f_1$ die Doppler-Frequenz und $f_0$ die Frequenz des ausgesendeten Ultraschallsignals. Für die hinteren Ultraschallsensoren ergibt sich die Dopplerfrequenz zu:

$$f_1 = (1 - 2 \cdot (v_1 : v_0)) \cdot f_0.$$

Die zu den Seiten ausgerichteten Sensoren, das heißt die senkrecht zur Bewegungsrichtung des Fahrzeugs ausgerichteten Sensoren, werden nicht durch den Doppler-Effekt beeinflusst, so dass die Frequenz der empfangenen Echos im Wesentlichen der ausgesendeten Frequenz $f_0$ entspricht.

Die Amplitude $A_0$ eines von einem Ultraschallsensor empfangenen Signals wird beeinflusst durch die Frequenzgangkurve des Sensors und der Frequenzgangkurve der verwendeten Filter in der Signalverarbeitung. Die Einflüsse dieser beiden Frequenzgangkurven werden zusammengefasst und gemeinsam als Frequenzgangkurve H (f) betrachtet, so dass die Amplitude $A_0$ durch die Gleichung

$$|A_0| = |H(f)| \cdot |S|$$

gegeben ist, wobei S die Amplitude des vom Boden reflektierten Signals ist. Ist das Fahrzeug in Bewegung, unterliegt das Bodenecho dem Einfluss des Doppler-Effekts. Dadurch verschiebt sich die Frequenz f um den Doppler-Offset df, so dass die Doppler-Frequenz $f_1 = f_0 + df$ ist. Durch die Dopplerverschiebung wird ein anderer Punkt der Frequenzgangkurve abgefragt, so ist die Amplitude $A_1$ des empfangenen dopplerverschobenen Signals gegeben durch:

$$|A_1| = |H (f_0 + df)| \cdot |S|.$$

Üblicherweise ist die Empfindlichkeit des Ultraschallsensors bei der Sendefrequenz $f_0$ am höchsten und nimmt für abweichende Frequenzen zunehmend ab. Somit weist auch die Frequenzgangkurve H ihr Maximum um die Sendefrequenz $f_0$ auf und verringert sich für davon abweichende Frequenzen.

Aufgrund ihrer seitlichen Anordnung unterliegen die nach links bzw. nach rechts ausgerichteten Ultraschallsensoren auch bei Bewegung des Fahrzeugs nicht dem Doppler-Effekt. Dadurch eignen sich die von den seitlichen Ultraschallsensoren erfassten Bodenechos als Referenzmessung bei der Frequenz $f_0$, mit der sich die erwartete Amplitude der Bodenechos bestimmen lässt. Aus dieser, nicht dem Doppler-Effekt unterliegender Amplitude $A_0$ und der Amplitude $A_1$ eines dem Doppler-Effekt unterliegenden Bodenechos, das heißt eine Messung eines nach vorne oder nach hinten ausgerichteten Ultraschallsensors, wird nun ein Verhältnis A gebildet:

$$A = A_1 : A_0 = |H(f_1)| \cdot |S| : |H(f_0)| \cdot |S|.$$

Das Verhältnis A gibt dabei auch den relativen Frequenzgang $H(f_1) : H(f_0)$ wieder.

Bei Stillstand des Fahrzeugs sind die Frequenzen $f_1$ und $f_0$ identisch, da keine Doppler-Verschiebung auftritt. Demnach ist unter der Voraussetzung, dass die Sensoren identisch sind, das Verhältnis A = 1. Ist einer der beiden verwendeten Sensoren stark beschädigt oder stark verschmutzt, wird das Verhältnis A deutlich vom Wert 1 abweichen und es kann bereits jetzt ein Defekt erkannt werden.

Da die Ultraschallsensoren aufgrund der Dopplerverschiebung auch in der Lage sein müssen, Ultraschallechos zu empfangen, die nicht bei der Sendefrequenz $f_0$ auftreten, muss jedoch sichergestellt sein, dass der Ultraschallsensor auch dopplerverschobene Signale zuverlässig erkennt. Dazu werden während der Fahrt des Fahrzeugs bei mindestens zwei verschiedenen Geschwindigkeiten $v_1$ mit seitlich ausgerichteten Ultraschallsensoren Amplituden $A_0$ von Bodenechos bei der Sendefrequenz $f_0$ als Referenzwert gemessen und mit den Amplituden $A_1$ der durch in Bewegungsrichtung des Fahrzeugs ausgerichteten Ultraschallsensoren empfangenen dopplerverschobenen Bodenechos in Verhältnis gesetzt. Die Kurve A(f), die das Verhältnis des Frequenzgangs eines in Bewegungsrichtung angeordneten Sensors zu einem senkrecht zur Bewegungsrichtung angeordneten Sensors darstellt, wird anschließend mit einer Referenzfrequenzgangkurve verglichen. Bei auftretenden Abweichungen, die über einen vorgegebenen Schwellenwert hinausgehen, wird auf eine Fehlfunktion eines der beteiligten Ultraschallsensoren geschlossen.

In einer Ausführungsform des Verfahrens wird das Verfahren zur Funktionsüberwachung der Ultraschallsensoren parallel zum normalen Betrieb der Ultraschallsensoren durchgeführt.

Dabei werden die Bodenechos der ohnehin für die Erfassung der Umgebung ausgesendeten Ultraschallsignale ausgewertet. Auf dieses Weise wird durch die Funktionsüberprüfung der Ultraschallsensoren deren Verfügbarkeit nicht eingeschränkt.

In einer Ausführungsform des Verfahrens wird vor dem Bilden des Verhältnisses A aus Messsignal und Referenzsignal geprüft, ob die Amplituden der empfangenen Bodenechos innerhalb eines vorgegebenen Bereichs liegen und/oder ob die Signallaufzeiten der Bodenechos innerhalb eines vorgegebenen Bereichs liegen und andernfalls wird die Messung verworfen.

Die Amplituden des Messsignals, welches durch ein Bodenecho gebildet wird, welches von einem parallel zur Bewegungsrichtung ausgerichteten Sensors erfasst wird, und des Referenzsignals, welches von einem senkrecht zur Bewegungsrichtung ausgerichteten Sensor erfasst wird, können stark schwanken, wenn der Untergrund ungleichmäßig ist. Des Weiteren ist es denkbar, dass bei einem oder mehreren Sensoren die direkte Sicht zum Boden durch naheliegende Objekte versperrt ist. In beiden Fällen sind die empfangenen Signale für eine Bestimmung der Frequenzgangkurve nicht geeignet. Der letztere Fall, dass ein nahes Objekt den Ultraschallsensor blockiert, lässt sich über die Laufzeit des Signals ermitteln. Bei einer Laufzeit, die kürzer ist als die erwartete Laufzeit, sollte der Messwert verworfen werden. Im ersteren Fall führt ein stark ungleichmäßiger Untergrund zu extremen Amplitudenschwankungen zwischen den einzelnen Sensoren. Einen anderen Fall stellt ein Untergrund dar, der die Ultraschallsignale schlecht oder gar nicht reflektiert. Beide Fälle können durch einen Vergleich der empfangenen Amplituden mit einem vorgegebenen zulässigen Amplitudenbereich ausgeschlossen werden.

In einer Ausführungsform des Verfahrens wird die relative Frequenzgangkurve A(f) des mindestens einen parallel zur Bewegungsrichtung ausgerichteten Ultraschallsensors über mehrere Stützstellen bei verschiedenen zugeordneten Frequenzen repräsentiert.

Dabei wird eine vorgegebene Anzahl N von Stützstellen gleichmäßig über den zu betrachteten Frequenzbereich verteilt und zu jeder Stützstelle ein Wert der Frequenzgangkurve A(f) gespeichert. Die Anzahl der Stützstellen ist beispielsweise zwischen 5 und 100 gewählt. Je mehr Stützstellen gewählt werden, desto kleiner ist der Frequenzabstand zwischen den Stützstellen.

In einer Ausführungsform des Verfahrens weisen die Stützstellen zueinander ein Abstand zwischen 0,1 kHz und 1 kHz auf.

In einer Ausführungsform des Verfahrens wird das Verfahren dann durchlaufen, wenn die von der Geschwindigkeit des Fahrzeugs abhängige Doppler-Frequenz $f_1$ eines empfangenen Bodenechos einer Frequenz F entspricht, die einer Stützstelle zugeordnet ist.

In einer bevorzugten Ausführungsform des Verfahrens wird aus mehreren Messungen des aus Messsignal und Referenzsignal gebildeten Verhältnisses A ein Mittelwert gebildet.

Mit der Mittelwertbildung wird verhindert, dass schwankende Eigenschaften des Bodens zu stark schwankenden Messwerten führen, da durch die Mittelung eine Glättung erfolgt.

Bevorzugt ist es dabei, wenn bei der Mittelwertbildung neuere Messungen stärker gewichtet werden, als ältere Messungen.

Das Verfahren kann für jeden am Fahrzeug angeordneten Ultraschallsensor durchgeführt werden, dabei wird für jeden Sensor getrennt die relative Frequenzgangkurve A(f) überwacht. Abhängig von der Anzahl der zu überwachenden Sensoren und der verwendeten Anzahl von Stützstellen, um die relative Frequenzgangkurve A(f) zu repräsentieren, können die Informationen in einem Array abgelegt werden. Denkbar ist es beispielsweise, ein zweidimensionales Array zu verwenden, bei dem eine Spalte die zur Frequenzgangkurve eines Ultraschallsensors gehörenden Stützstellen der Frequenzgangkurve enthält.

Der Frequenzbereich, in dem die Frequenzgangkurve eines Ultraschallsensors überwacht werden kann, ist dabei davon abhängig, ob der Sensor nach vorne oder nach hinten ausgerichtet ist, und ist auch von der üblicherweise erreichten Höchstgeschwindigkeit des Fahrzeugs abhängig. Die üblicherweise erreichte höchste Geschwindigkeit des Fahrzeugs begrenzt die maximal erreichbare Doppler-Verschiebung dt von der Sendefrequenz $f_0$. Beispielsweise für eine Höchstgeschwindigkeit des Fahrzeugs von 140 km/h, eine Sendefrequenz $f_0$ von 48 kHz und der bekannten Schallgeschwindigkeit von etwa 1235 km/h ergibt sich eine maximale Doppler-Verschiebung von etwa 11 kHz. Dabei verschiebt sich die Frequenz bei den vorderen Sensoren nach oben, so dass der überwachbare Bereich der Frequenzgangkurve von 48 kHz bis 59 kHz liegt, während die hinteren Sensoren eine Frequenzverschiebung zu niedrigen Frequenzen erfahren, so dass der überwachbare Bereich der Frequenzgangkurve zwischen 37 kHz und 48 kHz liegt.

Dies stellt jedoch in der Praxis keine Einschränkung dar, da die überwachten Frequenzen genau den für den Fahrbetrieb wichtigen Frequenzen entsprechen und eine durch Verschmutzung oder Beschädigung des Sensors verursachte Verschiebung der Resonanzfrequenz sich in der Frequenzgangkurve sowohl oberhalb als auch unterhalb der Frequenz $f_0$ bemerkbar macht.

Ein weiterer Aspekt der Erfindung ist es, eine Vorrichtung zur Funktionsüberwachung von Ultraschallsensoren eines Fahrzeugs bereitzustellen, wobei das Fahrzeug mindestens einen Ultraschallsensor der parallel zur Bewegungsrichtung ausgerichtet ist, mindestens einen Ultraschallsensor, der senkrecht zur Bewegungsrichtung ausgerichtet ist, und ein Steuergerät umfasst, wobei das Steuergerät eingerichtet ist, während der Fahrt mit den Ultraschallsensoren Ultraschallsignale mit einer Frequenz $f_0$ auszusenden und vom Boden reflektierte Bodenechos zu empfangen, wobei das Steuergerät eingerichtet ist das vorgeschlagene Verfahren auszuführen.

Des Weiteren wird ein Computerprogramm vorgeschlagen, gemäß dem eines der hier beschriebenen Verfahren durchgeführt wird, wenn das Computerprogramm auf einer programmierbaren Computereinrichtung ausgeführt wird. Das Computerprogramm kann auf einem maschinenlesbaren Speichermedium gespeichert werden, etwa auf einem permanenten oder wiederbeschreibbaren Speichermedium oder in Zuordnung zu einer Computereinrichtung oder auf einer entfernbaren CD-Rom, DVD oder einen USB-Stick. Zusätzlich oder alternativ kann das Computerprogramm auf einer Computereinrichtung wie etwa auf einem Server zum Herunterladen bereitgestellt werden, zum Beispiel über ein Datennetzwerk wie das Internet oder eine Kommunikationsverbindung wie etwa eine Telefonleitung oder eine drahtlose Verbindung.

Vorteile der Erfindung

Mit dem vorgeschlagenen Verfahren lässt sich nicht nur der vollständige Ausfall eines Ultraschallsensors, der sich als ein Ausbleiben eines Empfangs eines Bodenechos äußern würde, sondern bereits ein geringer Empfindlichkeitsverlust nachweisen. Zudem lässt sich die Funktion des Ultraschallsensors nicht nur bei der Sendefrequenz $f_0$, sondern über den gesamten für diesen Sensor relevanten Frequenzbereich testen. Durch einen Vergleich der durch das Verfahren ermittelten Frequenzgangkurve eines Sensors mit einer hinterlegten Referenzkurve lässt sich auch ein Empfindlichkeitsverlust bei anderen Frequenzen oder eine Verschiebung der Resonanzfrequenz des Sensors nachweisen. Auf diese Weise ist es möglich, ein Nachlassen der Empfindlichkeit des Sensors, zum Beispiel aufgrund von Verschmutzung, Brüchen in der Membran oder anderen physikalischen Beschädigungen, nachzuweisen, bevor der Sensor vollständig ausfällt.

Das erfindungsgemäße Verfahren kann vorteilhafterweise neben dem normalen Betrieb der Ultraschallsensoren durchgeführt werden, ohne diese zu behindern. Dadurch können die Ultraschallsensoren eines Fahrzeugs fortlaufend überwacht werden, ohne deren Verfügbarkeit einzuschränken.

Durch eine kontinuierliche Überwachung der Ultraschallsensoren können auch schleichende Effekte, wie sie durch Alterungseffekte oder Verschmutzung auftreten, erkannt werden.

Ebenfalls vorteilhaft ist, dass als Referenzsignal eine Messung eines nicht durch den Doppler-Effekt beeinflussten Ultraschallsensors verwendet wird. Dadurch kann das unterschiedliche Reflexionsverhalten der verschiedenen möglichen Untergründe leicht berücksichtigt werden. Als zusätzliche Maßnahme ist des Weiteren vorgesehen, dass eingehende Bodenechos mit einem vorgegebenen Amplitudenbereich und einer vorgegebenen Signallaufzeit verglichen werden. Dadurch können verfälschte Messwerte, wie sie beispielsweise entstehen wenn die direkte Sichtlinie eines Ultraschallsensors zum Boden durch ein nahes Objekt verdeckt wird oder wenn der Boden aufgrund seiner Beschaffenheit das Ultraschallsignal nur unzureichend reflektiert, erkannt und verworfen werden.

Des Weiteren ist vorteilhaft, dass zur Durchführung des vorgeschlagenen Verfahrens keine weiteren Komponenten am Fahrzeug angeordnet werden müssen. Dies erleichtert die Integration des Überwachungsverfahrens in bestehende technische Lösungen.

Kurze Beschreibung der Zeichnungen

Figur 1    zeigt ein Fahrzeug, an dem eine Vielzahl von Ultraschallsensoren angebracht sind, deren Funktion mit dem vorgeschlagenen Verfahren überwacht wird,

Figur 2    zeigt eine gemessene Frequenzgangkurve eines parallel zur Bewegungsrichtung des Fahrzeugs ausgerichteten Ultraschallsensors.

Ausführungsformen der Erfindung

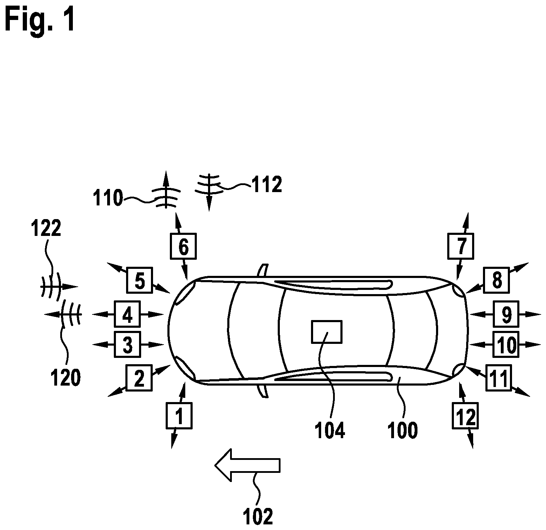

Figur 1 zeigt ein Fahrzeug, an dem mehrere Ultraschallsensoren angeordnet sind.

In Figur 1 ist ein Fahrzeug 100 dargestellt, an dem in der gezeigten Ausführungsform zwölf Ultraschallsensoren angeordnet sind. Davon sind die Ultraschallsensoren 1 bis 6 an der Front des Fahrzeugs 100 angeordnet und die Ultraschallsensoren 7 bis 12 sind im Heck des Fahrzeugs 100 angeordnet. Von den im Frontbereich angeordneten Ultraschallsensoren 1 bis 6 sind die Ultraschallsensoren 2 bis 5 nach vorne ausgerichtet, der Ultraschallsensor 1 ist zur linken Seite ausgerichtet und der Ultraschallsensor 6 ist zur rechten Seite des Fahrzeugs 100 ausgerichtet. Im Heck des Fahrzeugs 100 sind die Ultraschallsensoren 8 bis 11 nach hinten ausgerichtet, der Ultraschallsensor 12 zur linken Seite des Fahrzeugs 100 ausgerichtet und der Ultraschallsensor 7 ist zur rechten Seite des Fahrzeugs 100 ausgerichtet.

Dementsprechend sind die Ultraschallsensoren 2 bis 5 und 8 bis 11 parallel zur Bewegungsrichtung des Fahrzeugs 100 ausgerichtet. Die Bewegungsrichtung des Fahrzeugs 100 ist in Figur 1 mit dem Bezugszeichen 102 angedeutet. Die Ultraschallsensoren 1, 6, 7 und 12 sind senkrecht zur Bewegungsrichtung 102 des Fahrzeugs 100 ausgerichtet. Alle Ultraschallsensoren 1 bis 12 sind mit einem Steuergerät 104 des Fahrzeugs 100 verbunden. Durch das Steuergerät 104 wird die Funktion der Ultraschallsensoren 1 bis 12 des Fahrzeugs 100 überwacht.

Zur Überwachung der Ultraschallsensoren 1 bis 12 werden von diesen Ultraschallsignale 110, 120 bei einer Frequenz $f_0$ ausgesendet. Diese Sendefrequenz $f_0$ ist üblicherweise so gewählt, dass sie einer Resonanzfrequenz der Ultraschallsensoren 1 bis 12 entspricht. Beispielsweise beträgt die Frequenz $f_0$ 48 kHz. In dem in Figur 1 dargestellten Beispiel ist ein Ultraschallsignal, welches von einem nach vorne ausgerichteten, das heißt parallel zur Bewegungsrichtung 102 ausgerichteten, Ultraschallsensor ausgesendet wurde, mit dem Bezugszeichen 120 versehen. Ein von einem an der rechten Seite des Fahrzeugs 100 angeordneten Ultraschallsensor ausgesendetes Ultraschallsignal ist mit dem Bezugszeichen 110 versehen. Treffen die Ultraschallsignale 110, 120 auf dem Boden auf, so werden diese reflektiert. Dabei unterliegt das Bodenecho 122 des nach vorne abgestrahlten Ultraschallsignals 120 dem Doppler-Effekt. Abhängig von der Geschwindigkeit $v_1$ des Fahrzeugs 100 erfährt das Bodenecho 122 eine Doppler-Verschiebung df, so dass die Doppler-Frequenz des Bodenechos 122 $f_1 = f_0 + df$ ist. Das Bodenecho 112 des zur rechten Seite des Fahrzeugs 100 abgestrahlten Ultraschallsignals 110 unterliegt nicht dem Doppler-Effekt, da die Abstrahlrichtung senkrecht zur Bewegungsrichtung 102 des Fahrzeugs 100 liegt. Die Frequenz des Bodenechos 112 ist nicht verschoben und entspricht daher in etwa der ursprünglichen abgestrahlten Frequenz $f_0$.

Die empfangenen Bodenechos 112, 122 werden vom Steuergerät 104 ausgewertet. Dazu wird das Bodenecho 112, welches nicht dem Doppler-Effekt unterliegt, als Referenzsignal verwendet und das Bodenecho 122, welches aufgrund des Doppler-Effekts bei einer verschobenen Frequenz $f_1$ gemessen wird, als Messsignal verwendet. Zunächst wird dabei vom Steuergerät 104 geprüft, ob die Laufzeiten der Bodenechos 112, 122 und die gemessenen Amplituden plausibel sind. Dazu wird geprüft, ob die Amplituden der Bodenechos 112, 122 innerhalb eines vorgegebenen Amplitudenbereichs liegen sowie ob die Signallaufzeiten der Bodenechos 112, 122 in einem vorgegebenen Zeitintervall liegen. Durch diese Vergleiche soll ausgeschlossen werden, dass anstelle eines Bodenechos 112, 122 das Echo eines nahen Objekts gemessen wird, welches die direkte Sicht eines Ultraschallsensors 1 bis 12 auf dem Boden verdeckt. Des Weiteren soll ausgeschlossen werden, dass aufgrund eines Untergrunds, der die Ultraschallsignale 110, 120 unzureichend reflektiert, auf einen fehlerhaften Sensor geschlossen wird.

Wurden die gemessenen Bodenechos 112, 122 als gültige Messdaten eingestuft, wird aus den Bodenechos 112, 122 ein Verhältnis A gebildet, welches eine relative Amplitude eines Sensors, der parallel zur Bewegungsrichtung 102 ausgerichtet ist zu einem Sensor, der senkrecht zur Bewegungsrichtung des Fahrzeugs 100 ausgerichtet ist, darstellt. Diese Messung wird durch das Steuergerät 104 bei verschiedenen Geschwindigkeiten $v_1$ des Fahrzeugs 100 durchgeführt. Aus einer Vielzahl solcher Messungen wird der relative Frequenzgang eines Ultraschallsensors 1 bis 12 ermittelt. Im Steuergerät 104 werden die dem relativen Frequenzgang zugeordneten Kurven A(f) der einzelnen Ultraschallsensoren 1 bis 12 über Stützstellen repräsentiert. Je mehr Stützstellen N verwendet werden, desto präziser kann die relative Frequenzgangkurve A(f) eines Ultraschallsensors 1 bis 12 wiedergegeben werden. Jeder Stützstelle ist dabei eine Frequenz und eine relative Amplitude zugeordnet. Die Frequenz ist dabei die dopplerverschobene Frequenz $f_1$, bei der das dopplerverschobene Bodenecho 122 empfangen wurde. Die relative Amplitude entspricht dem Verhältnis A zwischen dem Messwert (Amplitude des dopplerverschobenen Bodenechos 122) und dem Referenzwert (Amplitude des nicht dem Dopplereffekt unterliegenden Bodenechos 112).

Bevorzugt werden die Stützstellen in Form eines zweidimensionalen Arrays abgespeichert, wobei die Spalten des Arrays jeweils die relativen Amplituden der dem jeweiligen Sensor zugeordneten Stützstellen enthalten. Jeder Zeile dieses Arrays ist dabei eine andere Doppler-Frequenz zugeordnet. Der Frequenzabstand zwischen zwei Stützstellen bzw. zwei Zeilen in dem zweidimensionalen Array ist davon abhängig, wie viele Stützstellen N verwendet werden, und welcher Frequenzbereich abgedeckt wird. Die Größe des abgedeckten Frequenzbereichs ist durch die maximal erreichbare Doppler-Verschiebung begrenzt. Diese wiederum wird durch die höchste üblicherweise erreichte Fahrzeuggeschwindigkeit vorgegeben. Beispielsweise bei einer Sendefrequenz $f_0$ und einer Höchstgeschwindigkeit von 140 km/h ist die maximale Dopplerverschiebung etwa 11 kHz. Durch die Doppler-Verschiebung erhöht sich die Frequenz der Bodenechos 122, die von den vorderen Sensoren 2 bis 5 empfangen werden, wobei sich die Frequenz von Bodenechos, die von den hinteren Sensoren 8 bis 11 empfangen werden, verringert. Dementsprechend lässt sich für die vorderen Sensoren 2 bis 5 die Frequenzgangkurve von der Sendefrequenz $f_0$ gleich 48 k/Hz bis zu einer Frequenz von 59 kHz (48 kHz + 11 kHz) überwachen. Entsprechend gilt für die hinteren Sensoren 8 bis 11, dass deren Frequenzgangkurve im Bereich von 37 kHz bis 48 kHz überwacht werden kann.

Wird die relative Frequenzgangkurve A(f) der Ultraschallsensoren 1 bis 12 mit Hilfe von beispielsweise 20 Stützstellen repräsentiert, und beträgt die Höchstgeschwindigkeit 140 km/h, ergibt sich zwischen den Stützstellen ein Frequenzabstand von 0,55 kHz. Bei diesem Beispiel entspricht eine Doppler-Verschiebung um 0,55 kHz einer Fahrzeuggeschwindigkeit von 7 km/h. Dementsprechend ist es bei dieser Wahl vorteilhaft, wenn die Messungen immer dann erfolgen, wenn die von der Fahrzeuggeschwindigkeit $v_1$ abhängige Doppler-Verschiebung einer Frequenz entspricht, der eine Stützstelle zugeordnet ist. Dies ist hier der Fall, wenn die Fahrzeuggeschwindigkeit ein Vielfaches von 7 km/h ist.

Um Sprünge in den Messdaten zu vermeiden, beispielsweise verursacht durch Unregelmäßigkeiten im Untergrund, die zu Variationen in der Amplitude der Bodenechos 112, 122 führen, ist es bevorzugt, neue Messwerte nicht einfach an die entsprechende Stelle des Arrays zu schreiben, sondern eine Mittelwertbildung durchzuführen. Besonders vorteilhaft ist dabei eine Mittelwertbildung, bei der neuere Messungen stärker gewichtet werden, als ältere Messungen. Eine solche Mittelwertbildung kann beispielsweise über die Formel

$$M_2 = \lambda \cdot M_1 + (1 - \lambda) \cdot M_0$$

realisiert werden, wobei $M_0$ der aktuelle Messwert ist, $M_1$ der bisherige im Speicher abgelegte Messwert ist und $M_2$ der neue Mittelwert im Speicher ist. $\lambda$ ist dabei eine Konstante zwischen 0 und 1, die üblicherweise in der Nähe von 1 gewählt wird.

Nachdem die relativen Frequenzgangkurven A(f) der jeweiligen Ultraschallsensoren 1 bis 12 ermittelt bzw. aktualisiert wurden, werden diese mit einer im Steuergerät 104 hinterlegten Referenzfrequenzgangkurve verglichen. Dabei ist es möglich, für jeden Sensor eine eigene Referenzkurve zu hinterlegen. Werden durch das Steuergerät 104 Abweichungen bei einem Vergleich zwischen der gemessenen relativen Frequenzgangkurve und einer im Speicher des Steuergeräts 104 hinterlegten Referenzfrequenzgangkurve festgestellt, wird auf einen Defekt des zugeordneten Ultraschallsensors geschlossen. Das Steuergerät 104 kann dann geeignete Maßnahmen treffen, wie beispielsweise den Fahrer informieren und/oder den entsprechenden Ultraschallsensor abschalten.

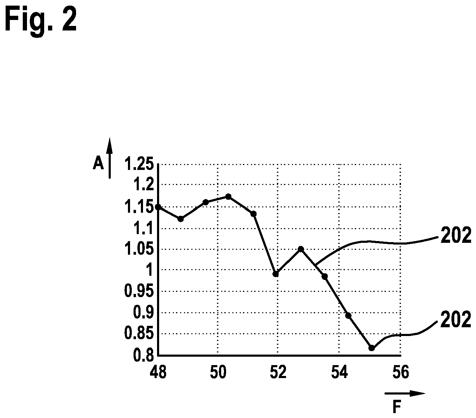

Figur 2 zeigt ein Beispiel einer relativen Frequenzgangkurve eines Ultraschallsensors.

In Figur 2 ist eine Frequenzgangkurve 200 eines Ultraschallsensors dargestellt. Auf der x-Achse ist die Frequenz F aufgetragen, in dem dargestellten Beispiel von 48 kHz bis 56 kHz. Auf der y-Achse ist die relative Amplitude aufgetragen, in dem in Figur 2 dargestellten Beispiel ist die Achse von 0,8 bis 1,25 eingeteilt. Die relative Frequenzgangkurve 200 umfasst in diesem Beispiel Stützstellen 202, denen jeweils eine Frequenz und eine relative Amplitude zugeordnet ist.

Wie der Figur 2 entnommen werden kann, weist die Frequenzgangkurve 200 in der Nähe der Frequenz $f_0$ gleich 48 kHz ihren höchsten Wert auf, und nimmt ab, je größer die Frequenzen von der Resonanzfrequenz des Sensors abweichen.

**Patentansprüche**

1.    Verfahren zur Funktionsüberwachung von Ultraschallsensoren (1 - 12) eines Fahrzeugs (100), wobei das Fahrzeug (100) mindestens einen Ultraschallsensor (2 - 5, 8 - 11), der parallel zur Bewegungsrichtung (102) ausgerichtet ist, und mindestens einen Ultraschallsensor (1, 6, 7, 12), der senkrecht zur Bewegungsrichtung (102) ausgerichtet ist, umfasst, wobei die Ultraschallsensoren (1 - 12) Ultraschallsignale (110, 120) mit einer Frequenz $f_0$ aussenden und wobei die Ultraschallsensoren (1 - 12) während der Fahrt vom Boden reflektierte Bodenechos (112, 122) empfangen, **dadurch gekenn-**

**zeichnet, dass** mit mindestens einem senkrecht zur Bewegungsrichtung ausgerichteten Ultraschallsensor (1, 6, 7, 12) ein Bodenecho (112) als Referenzsignal aufgezeichnet wird und mit mindestens einem parallel zur Bewegungsrichtung ausgerichteten Ultraschallsensor (2 - 5, 8 - 11) ein dopplerverschobenes Bodenecho (122) als Messsignal aufgezeichnet wird, wobei abhängig von der Dopplerfrequenz $f_1$ des dopplerverschobenen Bodenechos (122) ein Verhältnis (A) aus der Amplitude des Messsignals und der Amplitude des Referenzsignals gebildet wird und aus mindestens zwei bei verschiedenen Dopplerfrequenzen $f_1$ bestimmten Verhältnissen (A) die Frequenzgangkurve (200) des mindestens einen parallel zur Bewegungsrichtung ausgerichteten Ultraschallsensors (2 - 5, 8 - 11) ermittelt wird und wobei eine Fehlfunktion eines Ultraschallsensors (1 - 12) durch Abweichungen der ermittelten Frequenzgangkurve (200) von einer Referenzfrequenzgangkurve erkannt wird.

2. Verfahren nach Anspruch 1, **dadurch gekennzeichnet, dass** das Verfahren parallel zum normalen Betrieb der Ultraschallsensoren (1 - 12) durchgeführt wird.

3. Verfahren nach Anspruch 1 oder 2, **dadurch gekennzeichnet, dass** vor dem Bilden des Verhältnisses (A) aus der Amplitude des Messsignals und der Amplitude des Referenzsignals geprüft wird, ob die Amplitude der empfangenen Bodenechos (112, 122) innerhalb eines vorgegebenen Bereichs liegt und/oder ob die Signallaufzeit der Bodenechos (112, 122) innerhalb eines vorgegebenen Bereichs liegt und andernfalls die Messung verworfen wird.

4. Verfahren nach einem der Ansprüche 1 bis 3, **dadurch gekennzeichnet, dass** die Frequenzgangkurve (200) des mindestens einen parallel zur Bewegungsrichtung ausgerichteten Ultraschallsensors (2 - 5, 8 - 11) über mehrere Stützstellen (202) bei verschiedenen zugeordneten Frequenzen (F) repräsentiert wird.

5. Verfahren nach Anspruch 4, **dadurch gekennzeichnet, dass** die Stützstellen (202) zueinander einen Abstand zwischen 0,1 kHz und 1 kHz aufweisen.

6. Verfahren nach Anspruch 4 oder 5, **dadurch gekennzeichnet, dass** das Verfahren dann durchlaufen wird, wenn die von der Geschwindigkeit des Fahrzeugs (100) abhängige Dopplerfrequenz $f_1$ eines empfangenen Bodenechos (122) einer Frequenz (F) entspricht, die einer Stützstelle (202) zugeordnet ist.

7. Verfahren nach einem der Ansprüche 1 bis 6, **dadurch gekennzeichnet, dass** aus mehreren Messungen des aus Messsignal und Referenzsignal gebildeten Verhältnisses (A) ein Mittelwert gebildet wird.

8. Verfahren nach Anspruch 7, wobei bei der Mittelwertbildung neuere Messungen stärker gewichtet werden als ältere Messungen.

9. Vorrichtung zur Funktionsüberwachung von Ultraschallsensoren (1 - 12) eines Fahrzeugs (100), wobei das Fahrzeug (100) mindestens einen Ultraschallsensor (2 - 5, 8 - 11), der parallel zur Bewegungsrichtung (102) ausgerichtet ist, mindestens einen Ultraschallsensor (1, 6, 7, 12), der senkrecht zur Bewegungsrichtung (102) ausgerichtet ist, und ein Steuergerät (104) umfasst, wobei das Steuergerät (104) eingerichtet ist, während der Fahrt mit den Ultraschallsensoren (1 - 12) Ultraschallsignale (110, 120) mit einer Frequenz $f_0$ auszusenden und vom Boden reflektierte Bodenechos (112, 122) zu empfangen, **dadurch gekennzeichnet, dass** das Steuergerät (104) eingerichtet ist, das Verfahren nach einem der Ansprüche 1 bis 8 auszuführen.

10. Computerprogramm, das das Verfahren nach einem der Ansprüche 1 bis 8 ausführt, wenn es auf einem Computer abläuft.

**Claims**

1. Method for monitoring the function of ultrasonic sensors (1-12) of a vehicle (100), wherein the vehicle (100) comprises at least one ultrasonic sensor (2-5, 8-11)i oriented parallel to the direction of movement (102) and at least one ultrasonic sensor (1, 6, 7, 12) oriented perpendicular to the direction of movement (102), wherein the ultrasonic sensors (1-12) emit ultrasonic signals (110, 120) at a frequency $f_0$, and wherein the ultrasonic sensors (1-12) receive ground echoes (112, 122) reflected by the ground during the journey, **characterized in that** at least one ultrasonic sensor (1, 6, 7, 12) oriented perpendicular to the direction of movement is used to record a ground echo (112) as a reference signal and at least one ultrasonic sensor (2-5, 8-11) oriented parallel to the direction of movement is used to record a Doppler-shifted ground echo (122) as a measurement signal, wherein a ratio (A) of the amplitude of the measurement signal and the amplitude of the reference signal is formed on the basis of the Doppler frequency $f_1$ of the Doppler-shifted ground echo (122) and the frequency response curve (200) of the at least one ultrasonic sensor (2-5, 8-11) oriented parallel to the direction of movement is determined from at least two ratios (A) determined at different Doppler frequencies $f_1$, and wherein a malfunction of an ultrasonic sensor (1-12) is detected by virtue of deviations of the determined frequency response curve (200) from a reference frequency response curve.

**2.** Method according to Claim 1, **characterized in that** the method is carried out in a manner parallel to the normal operation of the ultrasonic sensors (1-12).

**3.** Method according to Claim 1 or 2, **characterized in that**, before forming the ratio (A) of the amplitude of the measurement signal and the amplitude of the reference signal, a check is carried out in order to determine whether the amplitude of the received ground echoes (112, 122) is within a predefined range and/or in order to determine whether the signal propagation time of the ground echoes (112, 122) is within a predefined range and otherwise the measurement is rejected.

**4.** Method according to one of Claims 1 to 3, **characterized in that** the frequency response curve (200) of the at least one ultrasonic sensor (2-5, 8-11) oriented parallel to the direction of movement is represented via a plurality of supporting points (202) at different assigned frequencies (F).

**5.** Method according to Claim 4, **characterized in that** the supporting points (202) have a spacing of between 0.1 kHz and 1 kHz with respect to one another.

**6.** Method according to Claim 4 or 5, **characterized in that** the method is run through when the Doppler frequency $f_1$ of a received ground echo (122), which is dependent on the speed of the vehicle (100), corresponds to a frequency (F) assigned to a supporting point (202).

**7.** Method according to one of Claims 1 to 6, **characterized in that** a mean value is formed from a plurality of measurements of the ratio (A) formed from the measurement signal and the reference signal.

**8.** Method according to Claim 7, wherein newer measurements are given a higher weighting than older measurements when forming the mean value.

**9.** Apparatus for monitoring the function of ultrasonic sensors (1-12) of a vehicle (100), wherein the vehicle (100) comprises at least one ultrasonic sensor (2-5, 8-11) oriented parallel to the direction of movement (102), at least one ultrasonic sensor (1, 6, 7, 12) oriented perpendicular to the direction of movement (102) and a control unit (104), wherein the control unit (104) is set up to use the ultrasonic sensors (1-12) to emit ultrasonic signals (110, 120) at a frequency $f_0$ during the journey and to receive ground echoes (112, 122) reflected by the ground, **characterized in that** the control unit (104) is set up to carry out the method according to one of Claims 1 to 8.

**10.** Computer program which carries out the method according to one of Claims 1 to 8 when it runs on a computer.

**Revendications**

**1.** Procédé de surveillance du fonctionnement de capteurs à ultrasons (1 - 12) d'un véhicule (100), le véhicule (100) comportant au moins un capteur à ultrasons (2 - 5, 8 - 11) qui est orienté parallèlement à la direction de déplacement (102) et au moins un capteur à ultrasons (1, 6, 7, 12) qui est orienté perpendiculairement à la direction de déplacement (102), les capteurs à ultrasons (1 - 12) émettant des signaux ultrasonores (110, 120) à une fréquence $f_0$ et les capteurs à ultrasons (1 - 12) recevant, pendant le déplacement, des échos de sol (112, 122) réfléchis par le sol, **caractérisé en ce qu'**un écho de sol (112) est enregistré en tant que signal de référence avec au moins un capteur à ultrasons (1, 6, 7, 12) orienté perpendiculairement à la direction de déplacement et un écho de sol (122) décalé par effet Doppler est enregistré en tant que signal de mesure avec au moins un capteur à ultrasons (2 - 5, 8 - 11) orienté parallèlement à la direction de déplacement, un rapport (A) de l'amplitude du signal de mesure et de l'amplitude du signal de référence étant calculé en fonction de la fréquence Doppler $f_1$ de l'écho de sol (122) décalé par effet Doppler et la courbe de réponse en fréquence (200) de l'au moins un capteur à ultrasons (2 - 5, 8 - 11) orienté parallèlement à la direction de déplacement étant déterminée à partir d'au moins deux rapports (A) définis à des fréquences Doppler $f_1$ différentes et un défaut de fonctionnement d'un capteur à ultrasons (1 - 12) étant détecté par des écarts entre la courbe de réponse en fréquence (200) déterminée et une courbe de réponse en fréquence de référence.

**2.** Procédé selon la revendication 1, **caractérisé en ce que** le procédé est mis en oeuvre parallèlement au fonctionnement normal des capteurs à ultrasons (1 - 12).

**3.** Procédé selon la revendication 1 ou 2, **caractérisé en ce qu'**avant de calculer le rapport (A) de l'amplitude du signal de mesure et de l'amplitude du signal de référence, un contrôle est effectué pour vérifier si l'amplitude des échos de sol (112, 122) reçus se trouve à l'intérieur d'une plage prédéfinie et/ou si le temps de propagation du signal des échos de sol' (112, 122) se trouve à l'intérieur d'une plage prédéfinie, faute de quoi la mesure est rejetée.

**4.** Procédé selon l'une des revendications 1 à 3, **caractérisé en ce que** la courbe de réponse en fréquence (200) de l'au moins un capteur à ultrasons (2 - 5, 8 - 11) orienté parallèlement à la direction de déplacement est représentée par le biais de plusieurs points de référence (202) à différentes fréquences (F) associées.

5. Procédé selon la revendication 4, **caractérisé en ce que** les points de référence (202) présentent entre eux un écart compris entre 0,1 kHz et 1 kHz.

6. Procédé selon la revendication 4 ou 5, **caractérisé en ce que** le procédé se poursuit lorsque la fréquence Doppler $f_1$ dépendante de la vitesse du véhicule (100) d'un écho de sol (122) reçu correspond à une fréquence (F) qui est associée à un point de référence (202).

7. Procédé selon l'une des revendications 1 à 6, **caractérisé en ce qu'**une valeur moyenne est calculée à partir de plusieurs mesures du rapport (A) formé par le signal de mesure et le signal de référence.

8. Procédé selon la revendication 7, dans lequel les nouvelles mesures ont un poids plus fort que les mesures plus anciennes lors du calcul de la valeur moyenne.

9. Dispositif de surveillance du fonctionnement de capteurs à ultrasons (1 - 12) d'un véhicule (100), le véhicule (100) comportant au moins un capteur à ultrasons (2 - 5, 8 - 11) qui est orienté parallèlement à la direction de déplacement (102), au moins un capteur à ultrasons (1, 6, 7, 12) qui est orienté perpendiculairement à la direction de déplacement (102), et un contrôleur (104), le contrôleur (104) étant conçu pour, pendant le déplacement, émettre des signaux ultrasonores (110, 120) à une fréquence $f_0$ avec les capteurs à ultrasons (1 - 12) et recevoir des échos de sol (112, 122) réfléchis par le sol, **caractérisé en ce que** le contrôleur (104) est conçu pour mettre en oeuvre un procédé selon l'une des revendications 1 à 8.

10. Programme informatique qui met en oeuvre le procédé selon l'une des revendications 1 à 8 lorsqu'il est exécuté sur un ordinateur.

**Fig. 1**

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008004641 A1
- DE 102009032124 A1
- DE 102005057973 A1
- EP 2081052 A1
- EP 2472286 A2